# EUROPEAN PATENT APPLICATION

(11) **EP 0 936 140 A1**
(43) Date of publication of application: **18.08.1999**
(21) Application number: 97940326.8
(22) Date of filing: 10.09.1997
(51) Int. Cl.: B64C 27/615

(54) **ROTOR CONTROL SYSTEM**

(71) Applicant: Advanced Technology Institute of Commuter-Helicopter, Ltd., Kakamigahara-shi, Gifu 504 (JP)
(72) Inventor: YAMAKAWA, Eiichi, Advanced Technology Institute, Kakamigahara-shi, Gifu 504 (JP); KAWAKAMI, Kouji, Advanced Technology Institute, Kakamigahara-shi, Gifu 504 (JP); GOI, Tatsuhiko, Advanced Technology Institute, Kakamigahara-shi, Gifu 504 (JP)
(74) Representative: Ottevangers, Sietse Ulbe
(86) International application number: JP9703183
(87) International publication number: WO9912809

(57) **Abstract**

A rotor control system which includes a blade (10) fitted to a main rotor shaft (1) in such a fashion that the pitch angle is variable, a flap (20) fitted to the rear edge side of the blade (10) in such a fashion that the pitch angle is variable, a first link mechanism for controlling the pitch angle of the blade (10) and a second link mechanism for controlling the pitch angle of the flap (20). The first link mechanism includes a swash plate (14) comprising a rotation portion (12) connected to the blade (10) by a link mechanism and a control portion (13) undergoing displacement in accordance with the operation quantity. The second link mechanism includes a swash plate (31) comprising a rotation portion (29) connected to the flap (20) by a link mechanism and a control portion (30) undergoing displacement by actuators (36a and 26b), and a harmonic controller (37). According to this construction, a flap driving mechanism capable of exploiting effectively the flap performance can be accomplished, and the noise and vibration of a helicopter can be reduced.

## Description

### Technical Field

The present invention relates to a control system for a helicopter rotor comprising blades with a flap.

### Background Art

A helicopter generates various types of noise and fuselage vibration, and therefore a reduction of the noise and fuselage vibration is an important consideration especially in the case of passenger transport helicopter where the helicopter flies over urban areas as its regular route. The noise is classified as main rotor noise, tail rotor noise, BVI (blade vortex interaction) noise and others. BVI noise in particular is generated when a succeeding blade hit the vortex produced by a preceding blade during a rotor rotation, and becomes loudest when the helicopter makes a shallow descending flight. Further, the helicopter is subjected to intense fuselage vibration due to an interaction between the rotor and air loads, which causes bad riding comfort, errors in reading the instruments, and structural fatigue.

As a countermeasure to the above, a technique known as a higher harmonic control (HHC) is effective, which controls a local lift distribution over the rotor's rotating plane with a frequency integer multiple of a rotational frequency of the rotor. Generally, it is achieved by changing the pitch angle of the blades 3-5 times of rotor rotational frequency.

On the other hand, an ordinary control of the helicopter is carried out by controlling a pitch angle at a blade root end of the main rotor via an actuator, a swash plate, a link mechanism and the like.

The helicopter rotor is rotating at high speed, with a very high level of centrifugal force, with a very high level of vibration, and therefore a highly precise performance is required for the mechanism which controls a pitch angle of blade with higher harmonic control (HHC). Further, a strong aerodynamic moment and inertia moment are generated around feathering axes over the entire blades. To vary the entire blade pitch angle with HHC by driving the moment of inertia of the entire blade, a high-power actuator and hydraulic mechanism are required. This has been a cause of difficulty in a reduction of the system weight.

As countermeasures thereto, methods have been proposed in which a relatively small flap is attached adjacent to an outboard end of each blade at which dynamic pressure is sufficiently high, and the blade pitch angle is controlled by using the aerodynamic force generated by the flap (e.g. Japanese Unexamined Patent Publication JP-A 6-107,293(1994), U.S. Patent No. 3,077,934, No. 3,129,769, No. 3,589,831 and No. 4,461,611). By providing the flap near the outboard end of the blade, control with a small steering force is realized, and the entire control mechanism is made light and compact.

However, such an effective flap-driving mechanism has never existed heretofore, and a helicopter having blades with a flap has not been put to practical use yet.

### Disclosure of Invention

An object of the present invention is to realize a flap-driving mechanism which can efficiently derive a flap with HHC performance and to provide a rotor control system which can reduce the noise and vibration of a helicopter.

The present invention provides a rotor control system comprising:
a blade attached to a rotor shaft so as to have a variable pitch angle;
a flap attached to a trailing edge of the blade so as to have a variable pitch angle;
first control means for controlling the pitch angle of the blade; and
second control means for controlling the pitch angle of the flap.

According to the present invention, the second control means for controlling the pitch angle of the flap is provided independently of the first control means for controlling the pitch angle of the blade, and therefore the pitch angle of the flap may be controlled independently as desired. Thus, with such a flap control, a higher harmonic control (HHC) or the like for reducing noise and vibration may be implemented efficiently.

In the present invention, preferably, the first control means includes a first swash plate composed of a rotating element connected to the blade via a link mechanism and a non-rotating element displaceable in response to pilot control input, and
the second control means includes a second swash plate composed of a rotating element connected to the flap via a link mechanism and a non-rotating element displaceable by an actuator, and a higher harmonic control apparatus for driving the actuator with integer multiple of a rotational frequency of the rotor.

Since the first control means and second control means are placed independently, pilot can control a helicopter by changing the entire blade pitch angle with first control means, even in the case of the mulfunction of a flap or higher harmonic control system.

According to the present invention, by providing another swash plate for controlling the pitch angle of the flap separately from that for controlling the blade, flap drive may be effected independently of the blade. The pitch angle may be controlled with a high degree of freedom. Since the flap-driving actuator may be provided to the non-rotating element, the actuator may have a simple mechanism to contribute to compactness and lightweight of the system.

Where a higher harmonic control (HHC) is carried out based on flap drive, the closer to the tip end of the blade the flap is disposed the more efficiently a lift distribution over the rotor's rotating plane can be controlled, so that the noise and vibration reducing effect is improved. Further, a smaller drive mechanism is sufficient for high-speed driving of a flap having a small mass in comparison with for high-speed driving of a blade having a large mass, which is advantageous for reducing system weight.

As the swash plate and link mechanism for driving a flap, those having been actually used in numerous cases heretofore for driving blades may be used to realize a highly reliable flap mechanism.

In the present invention, preferably, the first control means includes a first swash plate composed of a rotating element connected to the blade via a link mechanism and a non-rotating element displaceable in response to pilot control input, and
the second control means includes an actuator connected to each flap via a link mechanism and rotatable with the rotor shaft, and a flap control apparatus for driving the actuator individually.

According to the present invention, by providing the actuator which rotates with the rotor shaft for controlling the pitch angle of the flap, and by driving each actuator individually, flap drive can be performed independently of the blade and the pitch angle of each blade can be controlled as desired.

Where a higher harmonic control is carried out based on flap drive, the closer to the tip end of the blade the flap is disposed the more efficiently a lift distribution over the rotor's rotating plane can be controlled, so that the noise and vibration reducing effect is improved. Further, a smaller drive mechanism is sufficient for high-speed driving of a flap having a small mass in comparison with high-speed driving of entire blade having a large moment of inertia, which is advantageous for reducing system weight.

As the actuator and link mechanism for driving a flap, those having been actually used in numerous cases heretofore for driving blades may be used to realize a highly reliable flap mechanism.

### Brief Description of Drawings

Fig. 1 is a view, partly in perspective, showing an embodiment of the present invention.
Fig. 2 is a view, partly in section, taken on line A-A of Fig. 1 and showing a transmission mechanism 2 adjacent to a swash plate 31.
Fig. 3A is a view, partly in section, taken on line B-B of Fig. 2, and Fig. 3B is a view taken in the direction of the arrows substantially along line C-C of Fig. 2.
Fig. 4 is a view, partly in perspective, showing another embodiment of the present invention.

### Best Mode for Carrying Out the Invention

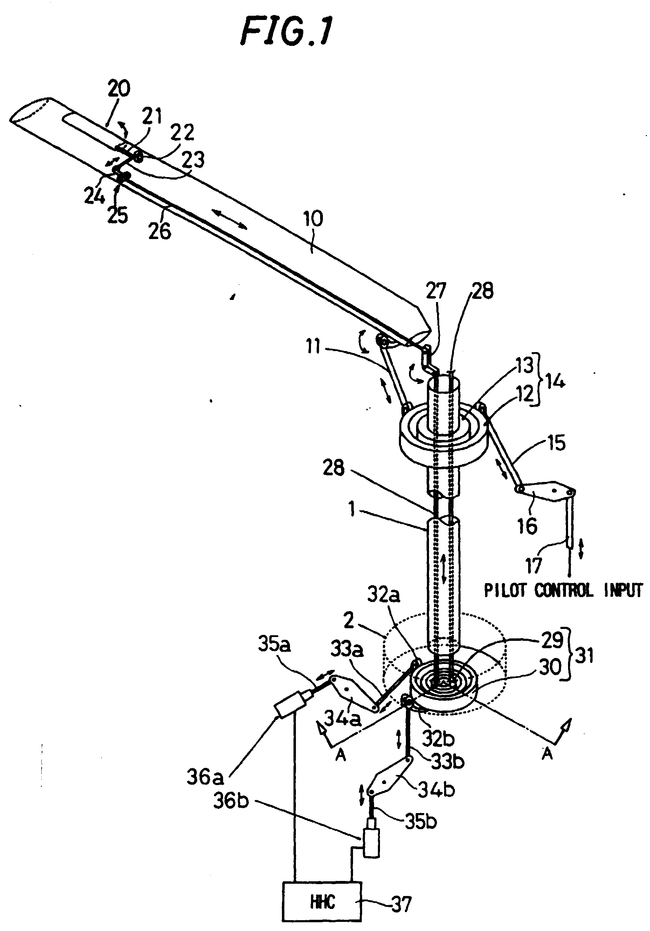

Fig. 1 is a view, partly in perspective, showing an embodiment of the present invention. To facilitate understanding, a link mechanism between a blade 10 and a main rotor shaft 1 is omitted from Fig. 1.

A helicopter rotor has two blades 10 (only one being shown in Fig. 1). The blade 10 is attached to the main rotor shaft 1 (which is hollow with part thereof omitted from Fig. 1) which is driven to rotate by an engine, and is rotatable at high speed counterclockwise as seen from above. The blade 10 is supported so as to be angularly displaceable about an axis extending in a span direction thereof, whereby a pitch angle of the blade 10 is controlled. In the vicinity of a root end of the blade 10, an upper end of a rod 11 and a leading edge of the blade is pinned together. A lower end of the rod 11 is pinned to a rotating element 12 of a swash plate 14.

The swash plate 14 is composed of the rotating element 12 rotatable with the rotor and a control element 13 which does not rotate. The control element 13 controls a vertical position and angle of inclination of the rotating element 12. Further, the control element 13 is linked to a maneuver system such as a maneuver stick via a link mechanism including a rod 15, a lever 16 and a rod 17 connected thereto. Thus, the swash plate 14 makes a linear displacement or an angular displacement in response to a maneuver amount of such as a collective pitch or a cyclic pitch, and thereby the pitch angle of the blade 10 is controlled.

On the other hand, in the vicinity of the outboard end of the blade 10, a flap 20 having an aerofoil section shape is formed by cutting out the trailing edge of the blade partially. The flap 20 is supported by a hinge (not shown) so as to be angularly displaceable, whereby a pitch angle of the flap 20 is controlled. A link mechanism for driving the flap 20 is accommodated in the blade 10 and has a flap shaft 21, a lever 22, rods 23 and 24, a lever 25 and a rod 26 connected in this order. Further, a root of the rod 26 is connected via a lever 27 to a rod 28 accommodated in the main rotor shaft 1. The pitch angle of the flap 20 is variable in response to a vertical displacement of the rod 28.

A lower end of the rod 28 is connected to a rotating element 29 of a swash plate 31. The swash plate 31 is composed of the rotating element 29 rotatable with the rotor, and a control element 30 which does not rotate. The control element 30 controls a vertical position and angle of inclination of the rotating element 29. Further, to the control element 30, two rods 32a, 32b extending in two directions orthogonal to each other are connected. The rod 32a is driven by an actuator 36a via a link mechanism including a rod 33a, a lever 34a and a rod 35a. Similarly, the rod 32b is driven by an actuator 36b via a link mechanism including a rod 33b, a lever 34b and a rod 35b. Thus, the two actuators 36a, 36b control the angle of inclination of the rotating element 29 of the swash plate 31, and further control the pitch angle of the flap 20.

The actuators 36a, 36b are driven by a higher harmonic control (HHC) apparatus 37. By driving the actuators with a multiple of a rotational frequency of the rotor, for example, a higher harmonic control of the rotor based on flap drive is achieved, so that the noise and vibration of the helicopter can be reduced.

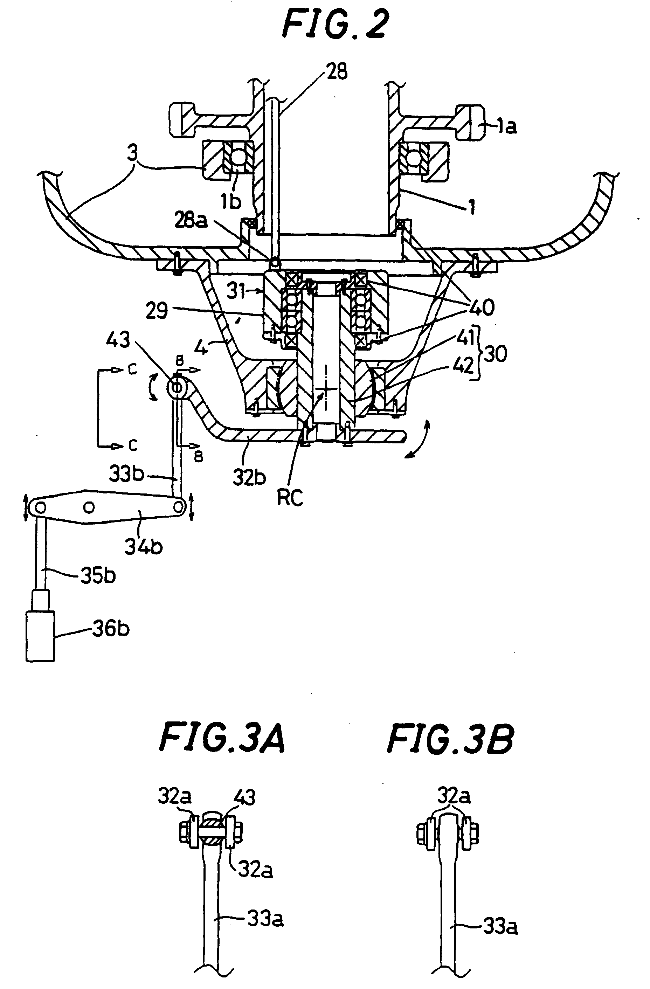

Fig. 2 is a view, partly in section, taken on line A-A of Fig. 1 and showing a transmission mechanism 2 in the vicinity of the swash plate 31. The link mechanism by means of the members denoted by 32b-36b will be described herein, but the link mechanism by means of the members denoted by 32a-36a is similar. The hollow main rotor shaft 1, on which a collector gear 1a linked to an engine output shaft is formed, is supported by a housing 3 of the transmission mechanism 2 via a bearing 1b. On the bottom of the housing 3, a housing 4 for supporting the swash plate 31 is mounted.

In the center of the housing 4, a ring-shaped spherical bearing 41 is mounted so as to be angularly displaceable with a control shaft 42 about the center RC of angular displacement. These spherical bearing 41 and the control shaft 42 constitute the control element 30 of the swash plate 31. The ring-shaped rotating element 29 is mounted on an upper portion of the control shaft 42 via bearings. The flap control rod 28 is connected to an upper surface of the rotating element 29 via a rod end bearing 28a. An oil leak preventing seal 40 is attached between a rotating portion and a non-rotating portion of each member.

On the other hand, the rod 32b is fixed to a lower end of the control shaft 42, an end of the rod 32b is connected via a rod end bearing 43 to the rod 33b, which is connected to the actuator 36b via the link mechanism composed of the lever 34b and the rod 35b.

Fig. 3A is a view, partly in section, taken on line B-B of Fig. 2, and Fig. 3B is a view taken in the direction of the arrows substantially along line C-C of Fig. 2. The tip end of the rod 32b is bifurcated, and the ball-shaped rod end bearing 43 is pinned therebetween, to smooth conversion between an angular displacement of the rod 32b and a linear displacement of the rod 33b.

Operation will be described next. When the rod 35b which is a movable portion of the actuator 36b is displaced upward, for example, the lever 34b displaces the rod 33b downward, the tip end of the rod 32b is angularly displaced downward about the center RC of angular displacement, and the control shaft 42 is similarly angularly displaced. Then the rotating element 29 of the swash plate 31 is also angularly displaced about the center RC of angular displacement, and the rod 28 is displaced downward. Then, again referring to Fig. 1, the rod 26 is displaced toward the blade root, the rod 23 is displaced toward the leading edge of the blade, and the trailing edge of the flap 20 is angularly displaced upward. The actuator 36a in Fig. 1 also causes the rotating element 29 of the swash plate 31 to be angularly displaced about the orthogonal axis. In this way, the pitch angle of the flap 20 may be controlled, as desired, about axes extending in two directions orthogonal to each other in a plane of rotor rotation.

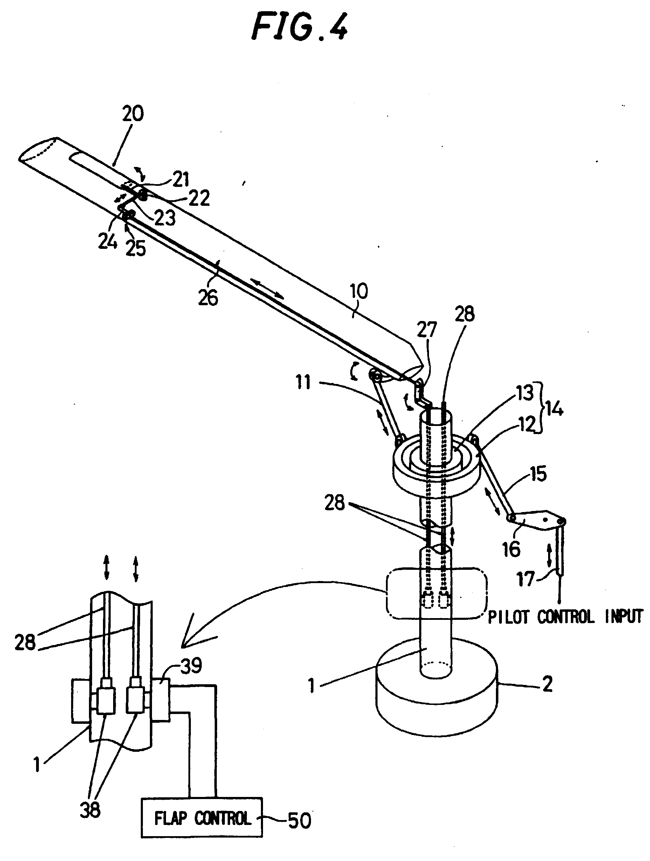

Fig. 4 is a view, partly in perspective, showing another embodiment of the present invention. To facilitate understanding, the linking mechanism between the blade 10 and the main rotor shaft 1 is omitted from Fig. 4. The drive mechanism of the blade 10 is similar to what is shown in Fig. 1, and its description will not be repeated.

In the vicinity of the outboard end of the blade 10, the flap 20 having a blade section shape is formed by cutting out the trailing edge of the blade partially. The flap 20 is supported by a hinge (not shown) so as to be angularly displaceable, whereby a pitch angle of the flap 20 is controlled. A link mechanism for driving the flap 20 is accommodated in the blade 10 and has the flap shaft 21, the lever 22, the rods 23, 24, the lever 25 and the rod 26 connected in this order. Further, the root of rod 26 is connected via the lever 27 to the rod 28 accommodated in the main rotor shaft 1. The pitch angle of the flap 20 is variable in response to a vertical displacement of the rod 28.

The lower end of the rod 28 is connected to the movable portion of the actuator 38 mounted in the main rotor shaft 1. The actuator 38 is provided for each flap 20. Since the rotor in Fig. 4 is the two blade type, two actuators 38 are provided. The actuator 38 which is rotatable with the main rotor shaft, is connected to a flap control apparatus 50 via a slip ring mechanism 39. The pitch angle of each flap 20 is controlled individually.

By driving the actuator 38 with a multiple of a rotational frequency of the rotor, for example, it is possible to realize a higher harmonic control of rotor based on flap drive and to reduce the noise and vibration of a helicopter.

### Industrial Applicability

According to the present invention, as described in detail hereinbefore, since the pitch angle of the flap may be controlled as desired, a higher harmonic control or the like for reducing noise and vibration may be implemented efficiently.

Further, by providing another swash plate for controlling the pitch angle of the flap separately from that for controlling the blade, flap drive may be effected independently of the blade, which makes it possible to control the pitch angle with a high degree of freedom independently of a rotation angle of the rotor. Since the flap-driving actuator may be provided to the non-rotating element, the actuator may have a simple mechanism to contribute to compactness and lightweight of the fuselage.

Further, by providing the actuator which rotates with the rotor shaft for controlling the pitch angle of the flap, and by driving each actuator individually, flap drive can be performed independently of the blade and the pitch angle of each blade can be controlled with a high degree of freedom without depending on a rotation angle of the rotor.

Where a higher harmonic control is carried out based on flap drive, the closer to the tip end of the blade the flap is disposed the more efficiently a lift distribution over the rotor's rotating plane can be controlled, so that the noise and vibration reducing effect is improved. Further, a,smaller drive mechanism is sufficient for high-speed driving of a flap having a small mass in comparison with high-speed driving of a blade having a large mass, which is advantageous for lightening the fuselage.

Thus, it is possible to realize a flap-driving mechanism which can efficiently derive a flap performance, resulting that noise and vibration of a helicopter can be drastically reduced.

## Claims

1. A rotor control system comprising:
a blade attached to a rotor shaft so as to have a variable pitch angle;
a flap attached to a trailing edge of the blade so as to have a variable pitch angle;
first control means for controlling the pitch angle of the blade; and
second control means for controlling the pitch angle of the flap.

2. The rotor control system of claim 1, wherein the first control means includes a first swash plate composed of a rotating element connected to the blade via a link mechanism and a non-rotating element displaceable in response to pilot control input, and
the second control means includes a second swash plate composed of a rotating element connected to the flap via a link mechanism and a non-rotating element displaceable by an actuator, and a higher harmonic control apparatus for driving the actuator with integer multiple of a rotational frequency of the rotor.

3. The rotor control system of claim 1, wherein the first control means includes a first swash plate composed of a rotating element connected to the blade via a link mechanism and a non-rotating element displaceable in response to pilot control input, and
the second control means includes an actuator connected to a flap via a link mechanism and rotatable with the rotor shaft, and a flap control apparatus for driving the actuator individually.
